# EUROPEAN PATENT SPECIFICATION

(11) **EP 4 410 942 B1**
(45) Date of publication and mention of the grant of the patent: **07.05.2025**
(21) Application number: 23220145.9
(22) Date of filing: 22.12.2023
(51) Int. Cl.: C12G 1/02, C12G 1/028, C12G 1/032, C12G 1/00

(54) **APPARATUS AND FERMENTATION PROCESS FOR WINEMAKING**
VORRICHTUNG UND FERMENTATIONSVERFAHREN ZUR WEINHERSTELLUNG
APPAREIL ET PROCÉDÉ DE FERMENTATION POUR LA VINIFICATION

(30) Priority: 31.01.2023 IT 202300001491
(43) Date of publication of application: 07.08.2024
(73) Proprietor: Tabarrini, Giampaolo, 06036 Montefalco PG (IT)
(72) Inventor: Tabarrini, Giampaolo, 06036 Montefalco PG (IT)
(74) Representative: Soldatini, Andrea

(56) References cited:
- FR-A1- 2 462 193
- US-A- 3 910 173
- US-A- 4 164 902
- US-A1- 2018 346 852

## Description

The present invention concerns the wine production and relates to a new apparatus and related process according to present claim 1 and claim 14 respectively, in particular for the so-called red winemaking fermentation step but more generally for any other type of winemaking in which a must fermentation step in the presence of skins is envisaged.

As is known, during the classic red winemaking process, after the destemming and pressing steps, the pomace, i.e. the skins and grape seeds, to transmit some of their colouring and aromatic substances, are left to macerate and ferment with the must, for a longer or shorter time depending on the cases and the results to be obtained. Fermentation takes place in vats, that is medium-large wine vessels, also called fermenters, which normally according to the most recent technologies are made of steel metal sheet optionally coated with resins, or stainless steel, provided with gaps to let a heating or cooling fluid circulate, with systems of doors, valves and pumps also for the execution of the so-called "pumping over", that is pumping and lifting the must from the bottom of the vat, to reinsert it into the upper part.

Precisely by virtue of the special operations for which it is intended, the fermenter has precisely characteristics that normally make it dedicated only to the fermentation step, and hinder or prevent the use thereof as a different cellar container, for example and in particular the flat bottom. From this derives a problem of occupation of the cellar spaces, since it is necessary to have many different "single-function" containers, perhaps partly unused, to respond from time to time to the various needs.

Beyond this, the Applicant has realized that fermentation in the known vessels intended for this purpose, such as the vessels disclosed by patent publications US2018/346852 and US4164902 with a perforated fermentation basket or a screen housed in a cylindrical tank, still presents some criticalities, from the point of view of the efficacy of the fermentation process, which if resolved would lead to an appreciable qualitative improvement, in oenological terms, of the result of the process itself.

The present invention therefore stems at the same time from the need to improve the logistics of the cellar and from having intuited some criticalities of the fermentation step in the known fermenters, criticalities hitherto hidden and/or not well put into focus in their impact on the quality of the oenological result.

Both of these aspects are addressed by the fermentation apparatus for winemaking according to the present invention, which is defined by the first of the appended claims. Preferred embodiments of the apparatus of the invention are the subject-matter of the dependent claims from 2 to 13. The invention also relates to a fermentation process according to the appended claim 14.

The characteristics and the advantages of the fermentation apparatus and process for winemaking according to the present invention will become apparent from the following description of an embodiment thereof, made by way of non-limiting example, with reference to the accompanying drawings in which:

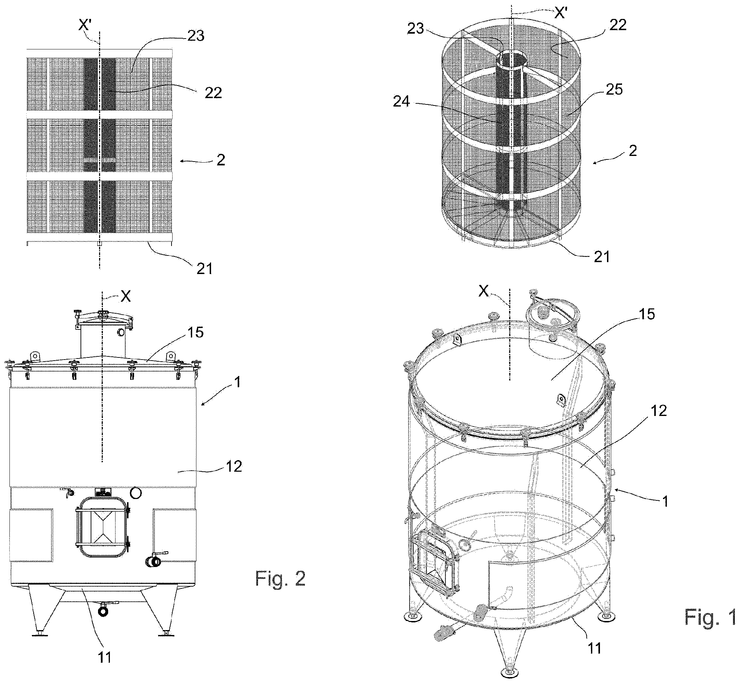

- Figure 1 is a perspective view of an apparatus according to the invention shown exploded, i.e. with an inner basket extracted and separated with respect to an outer vessel or container;
- Figure 2 shows frontally the apparatus of Figure 1, always exploded;

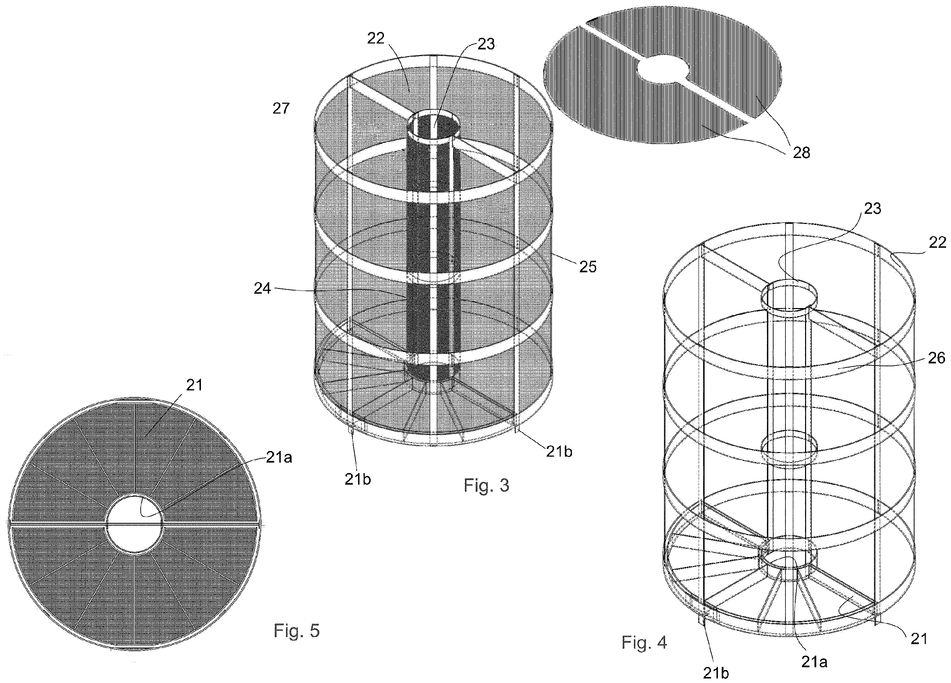

- Figure 3 shows in isolation and in greater magnification the basket of the apparatus according to the previous figures, together with its own cap, not depicted in the previous figures;
- Figure 4 is a representation of the basket limited to its cage framework, that is, with omitted portions of mesh or slotted sheet that develop the walls thereof, and the cap being likewise omitted;
- Figure 5 is a bottom view of the basket, with the bottom shown completely, unlike the previous figures in which for greater illustrative clarity this part is depicted only partially;
- Figure 6 is a front view similar to that of Figure 2, with the basket shown in section (as well as in a schematic representation with the walls omitted) inserted in the outer vessel (without its own cover roof) and in a step of loading the destemmed grapes, prior to the start of the fermentation step;
- Figure 7 is a partially sectional view of the apparatus assembly (basket loaded with destemmed grapes inserted into the vessel filled with must) during the fermentation step; and
- Figure 8, always in front view and with the basket schematically in section, depicts the extraction of the basket from the vessel and the discharging of the pomace at the end of the fermentation step.

With reference to said figures, the fermentation apparatus for winemaking according to the invention comprises a wine vessel (preferably a barrel) 1 having a general structure associable to the known cellar vessels, net of the peculiarities that will be discussed below. The vessel 1 will therefore be a cylindrical (or prismatic) drum rising from a ground support base, with vertical axis X. Typically, the vessel is made of stainless steel, and is, or can be, equipped with any device (doors, circuitry, valves, taps, thermal control devices such as air conditioning pockets, etc.) already in use in the sector and well known to the expert in the field.

The vessel 1 defines internally, starting from a bottom 11 and with a side wall 12, a liquid containing volume 13 (specifically, grape must), accessible from above through a top opening 14 closed by a removable roof 15, with sealing closure made according to systems known in the sector.

According to the main aspect of the invention, there is then provided a basket 2 for containing destemmed grapes, the basket 2 being at least partially made of a wall material pervious to liquid and substantially impervious to solid materials and being configured to be removably arranged in a position of complete insertion into the volume of the vessel 1, the basket defining a containing compartment 22 of the destemmed grapes that excludes at least one core region 23 which is adapted to be, with the basket in the position of insertion, open on the inner volume 13 of the vessel 1 and in liquid-only communication with the containing compartment 22 of the destemmed grapes.

In the illustrated embodiment, this solution is specifically configured according to a preferred construction that provides a basket 2 that is in turn cylindrical drum-like (but of course alternatively also prismatic) of axis X' and annular base materialized by a bottom 21 evolving around a central hole 21a. From the edges, inside and outside of the bottom 21 an inner side wall 24 and an outer side wall 25 rise, respectively, which are made of the aforesaid material that serves as a barrier to the solid component but allows the exchange of liquid, typically a mesh or a slotted sheet of metal or other still compatible material, the whole supported by a cage framework 26. The finesse of the mesh to be adopted takes into account the opposite needs, on the one hand that of allowing the flow of the must, on the other that of not letting the grape seeds or even the skins pass through, or also of not letting the aforesaid grape seeds get stuck in the mesh, making cleaning difficult. With elongated slots of dimensions of about 20mm (elongation) x 2mm (width), for example, an excellent compromise can be for example and in particular achieved, but obviously variations with respect to these indicative measures will be possible.

In the radial space between the inner side wall 24 and the outer wall 25, there is therefore delimited the containing compartment 22 of the destemmed grapes, while the inner side wall 24 evolves around a central core region 23 rising along the axis X' and that through the hole 21a of the bottom 21 is completely open towards the outside of the compartment 22 and therefore of the basket 2.

The body of the basket 2 as defined above defines at the top, i.e. on the part axially opposite to the bottom 21, an opening 27 for loading the destemmed grapes and is advantageously completed by a cap 28 which made in the same structure as the body can be reversibly fixed to it to intercept the opening 27. The cap 28 can be removable like in the example, or be connected to the body in movable opening or closing relationship (with door or equivalents). In general, obviously, it can be talked about at least one shutting cap of the at least one loading opening of the basket where the latter assumes geometrically and structurally different conformations from that of the still preferred example illustrated.

Returning to the bottom 21, this in turn advantageously has an openable configuration to allow rapid and easy emptying/discharging, for example being made like in the embodiment illustrated in two halves 21b, 21c that are articulated in a foldable manner at respective hinge points in diametrically opposite areas of the edge from which the outer wall 25 rises. Obviously, other similar solutions (reversibly fixed and removable bottom, sliding solutions, etc.) may be equivalently provided for.

The basket 2 is inserted into the vessel 1, again with reference to the example illustrated, through the top opening 14 after removal of the roof 15, in a coaxial arrangement (coincidence of the axis X' of the basket with the axis X of the vessel), until the bottom 21, optionally provided with feet 21b, is brought to rest on the bottom 11 of the vessel. In this position of complete insertion, the outer wall 25 of the basket is close to the side wall 12 of the vessel 1, at a distance that is preferably between 10 and 20 cm. It should be specified that the drawings attached herein are to be understood as schematic and conceptual, therefore not necessarily realistic with regard to the dimensional scale, the relative dimensions between the basket and the vessel may also advantageously be such as to define a volumetric ratio between 70% and 90%. However, this ratio may vary depending on the type of vine variety being processed and how much must it tends to release. In this sense, interchangeable baskets of different dimensions may also be provided to equip the same vessel.

The apparatus according to the present invention is thus operationally usable as follows. The step in which the apparatus intervenes is the fermentation step, whether we are talking about a real and traditional red winemaking, or more generally when reference is made to a fermentation that at least for a certain time takes place in contact with the solid part of the destemmed grapes, which can also intervene in the context of winemaking for white wines.

This fermentation step carried out with the apparatus therefore provides for introducing the basket 2 into the vessel 1, and carrying out the loading of destemmed grapes (thereby obviously meaning destemmed grapes already pressed, that is and/or in general with liquid component already extracted) in the compartment 22 of the basket. Following a filling control of the vessel by the must, a condition is reached such as to make the immersion of the basket, and therefore of the solid part of the destemmed grapes, in the must complete. It is in this condition that fermentation is carried out for the desired time, a fermentation which thanks to the physical separation between the solid part and the liquid part operated by the containing action of the basket 2, but with constant exchange of liquid and consequent phenomenon of infusion of the solid part in the must, made pervasive and operating on a very wide exchange surface thanks to the presence of the must in the region 23, to penetrate the heart of the solid mass, provides absolutely unprecedented results in terms of the quality of the oenological result and possibility of orienting/directing the process towards different results depending on the needs or taste. Obviously, nothing prohibits superimposing already known fermentation control techniques (pumping over, thermal control) on this infusion phenomenon, indeed, this superimposition will be a source of further possibilities and advantages, since the possibility of affecting in a controlled way all the solid mass contained in the basket will synergistically increase and enhance the possibilities offered by these techniques.

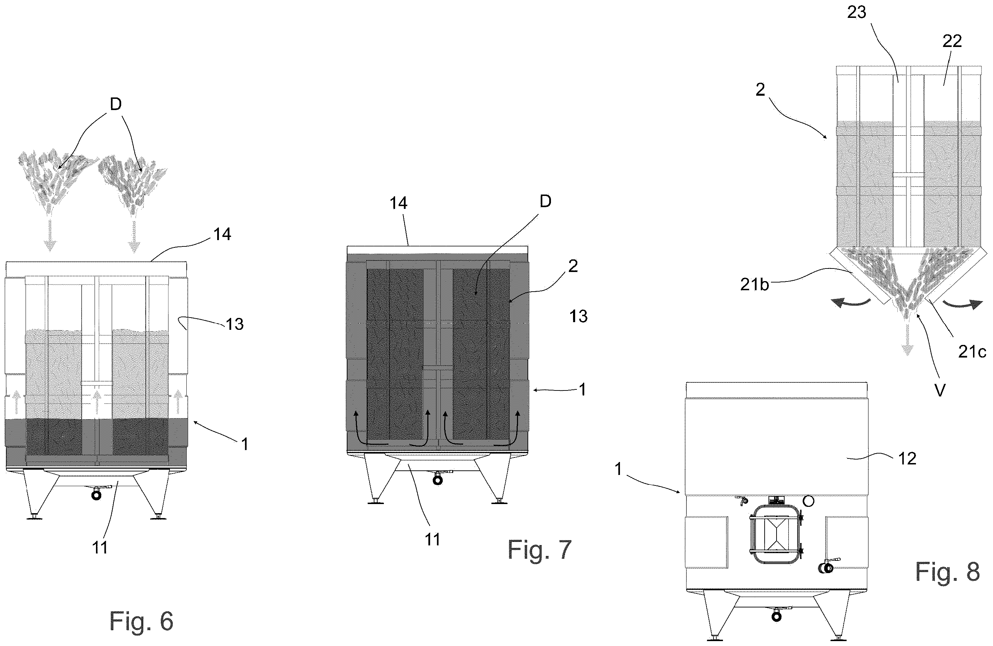

For a more detailed description and more adherent to a possible mode of concrete use, please refer specifically to Figures 6 to 8. Figure 6 shows the loading of the destemmed grapes D into the basket 2, open above, with simultaneous partial flooding of the vessel itself by the liquid component (must) of the destemmed grapes through the pervious walls of the basket, the whole until substantially filling the vessel. At this point a fraction of the must is extracted from the vessel with concomitant lowering of the level of the destemmed grapes in the compartment 22 of the basket 2. Further destemmed grapes are then loaded into the compartment of the basket until the basket is substantially filled.

Finally, the basket is closed with its own cap 28 and the previously extracted fraction of must, or at least part of said fraction, is then returned to the vessel 1 until the same is again filled and the basket 2, with the destemmed grapes D contained therein, is completely immersed by the must. This condition is depicted by Figure 7 in which the dark arrows schematically highlight the upward movements of the must around and within the solid mass.

At the end of the desired fermentation time, the basket is extracted (Figure 8) and the spent pomace V discharged outside the basket after opening the bottom 21. The fermented must is then extracted from the vessel and destined for the following steps according to known winemaking practices and techniques.

In addition to what has already been pointed out about the possibilities offered by the invention in terms of the oenological result, it is worth noting another aspect of considerable significance of the invention, namely that due to the containing action exerted by the basket, the vessel 1 can neglect the particular limitations to which the known fermenters are subject, starting from the need for a flat bottom. The vessel 1 according to an embodiment of the invention can therefore for example have, and usually preferably will have, a conical bottom, this being already a feature that makes it suitable to be used as a different cellar container replacing the traditional conical bottom containers for settling. Thanks to the removable roof, a float can be inserted and a common vessel transformed into a so-called always-full vessel.

In summary, the vessel according to the invention can at the same time replace at least the following types of known containers, of a dedicated type: fermenters, always-filled barrels, containers with a conical bottom for storage. In this way, the possibility of flexibly managing the needs and the spaces of the cellar will increase, with also the achievement of consequent savings. In fact, thanks to the multifunctionality of the vessel, it will be possible to have several vessels or barrels in the same cellar space that perform several functions or, conversely, reduce the spaces because the same barrels can be used flexibly to cover different needs.

The roof of the vessel can also be designed to serve as an integrated walkway, in order to reduce the overall dimensions of stairs and walkways and pillars that must be laid on the ground and that in any case are subject to accumulation of dirt.

The wine vessel and the basket may also be provided with guiding means apt to mutually cooperate, to guide and facilitate the insertion of the basket into the vessel and refer their position to each other. Such guiding means may for example comprise one or more mutually coupled guiding tracks extending respectively on the inside of the side wall of the vessel or and on the outside of the outer wall of the basket, orthogonally to their respective bottoms.

Further advantageous features of the invention may comprise the following:
- saving of calories/frigories due to the shape of the basket, the release of heat with CO₂ from the central area and from the sides, and the large amount of liquid in direct contact with the air conditioning pockets of the wall of the compartment (in the traditional systems this contact region is also occupied by the skins that decrease the heat exchange capacity);
- saving of hours of work in winemaking; in fact, once the vessel is filled, the contents can be left to ferment without any intervention, except for possibly small additions of nutrients. However, the possibility of resorting to the so-called *délestage* or to other oenological practices known per se in the sector is not excluded;
- unchanged possibility of realizing, with the same vessel, a completely classic winemaking; even if made with a conical bottom, the vessel has all the technical characteristics to be used as a classic fermenter, therefore without an inner basket, if the production needs so require.

The present invention has been described so far with reference to the preferred embodiments thereof. It is intended that other embodiments may exist which relate to the same invention, all falling within the scope of protection of the claims indicated below.

## Claims

1. Fermentation apparatus for winemaking comprising: a winemaking vessel (1) with a bottom (11) of the vessel, a polygonal or circular side wall (12) rising from the bottom (11), surrounding a containing volume (13), and a top opening (14) shut by a removable roof (15); and a basket (2) for containing destemmed grapes, said basket (2) being at least partially made of a wall material pervious to liquid and substantially impervious to solid materials and being capable of being removably arranged in a position of complete insertion into said wine vessel (1), said basket defining a containing compartment (22) of the destemmed grapes evolving around at least one core region (23), said core region (23) being open on said containing volume (13) of the vessel (1) when the basket (2) is in said position of insertion into the vessel (1), said at least one core region (23) being in liquid-only communication, through said wall material, with said containing compartment (22) of the destemmed grapes.

2. Apparatus according to claim 1, comprising a bottom (21) of the basket (2), adapted to be arranged adjacent said bottom (11) of the vessel, and side walls (24, 25) rising from said bottom (21) of the basket, said bottom (21) and said side walls (24, 25) of the basket being made of said wall material pervious to liquid and substantially impervious to solid materials, said bottom (21) and said side walls (24, 25) delimiting said containing compartment (22) of the destemmed grapes, having a substantially annular base, whereby said containing compartment (22) develops around one of said at least one core region (23) rising centrally from said bottom (21) of the basket (2).

3. Apparatus according to claim 1 or 2, wherein said bottom (21) of said basket (2) is removable or openable from said side walls (24, 25) of said basket (2).

4. Apparatus according to any one of the previous claims, wherein said basket (2) comprises a body having at least one opening (27) for loading the destemmed grapes and at least one respective opening or removable cover cap (28) suitable for reversibly shutting said at least one opening (27).

5. The apparatus according to claim 4, wherein said opening (27) for loading the destemmed grapes is provided in a position opposite to said bottom (21), said cap (28) being a movable or removable shutting cover of said opening.

6. Apparatus according to any of the previous claims, wherein said wall material is a mesh or slotted sheet material supported by a cage framework (26).

7. Apparatus according to claim 6, wherein said wall material comprises a plurality of elongated slots of dimensions of about 20mm of elongation by 2mm of width.

8. Apparatus according to any of the claims from 2 to 7, wherein said bottom (21) of said basket (2) is a flat annular bottom defined between an inner closed edge and an outer closed edge, the basket further comprising said side walls (24, 25) arranged coaxially and elevating from said inner edge and said outer edge of said annular bottom, respectively.

9. Apparatus according to claim 8, wherein said inner and outer edges are circular, or have the outline of a regular polygon, said side walls (24, 25) of said basket arranged coaxially comprising cylindrical or prismatic inner (24) and outer walls (25).

10. Apparatus according to claim 9, wherein said outer side wall (25) of said basket and said polygonal or circular side wall (12) of said wine vessel have a mutual radial distance of approximately 10 to 20 cm.

11. Apparatus according to any of the previous claims, wherein the relative dimensions between said basket (2) and said vessel (1) are such as to define a volumetric ratio between 70% and 90%.

12. Apparatus according to any of the previous claims, wherein said wine vessel (1) and said basket (2) comprise guiding means apt to mutually cooperate, to guide the insertion of the basket into the vessel and refer their position to each other.

13. Apparatus according to any of the previous claims, wherein one or more support feet (21b) project from said bottom (21) of said basket (2), apt to abut on said bottom (11) of said vessel.

14. Winemaking process comprising a fermentation step conducted with the apparatus according to any one of claims 1 to 13, wherein said fermentation step comprises: introducing said basket (2) into said vessel (1); loading destemmed grapes into the containing compartment (22) of said basket (2); controlling the filling of the vessel (1) by the grape must so that the immersion of the basket (2) in the must is complete; waiting for the fermentation to take place for the desired time; removing the basket (2) and discharging the remaining solid component of the destemmed grapes outside the vessel (1); and extracting the fermented must from the vessel (1).

15. Process according to claim 14, wherein after loading the destemmed grapes into the basket (2) with flooding of the vessel by the must through the pervious walls of the basket (2) until substantially filling said vessel, a fraction of the must is extracted from the vessel (1) with concomitant lowering of the level of the destemmed grapes in the containing compartment (22) of the basket (2); further destemmed grapes are then loaded into the compartment (22) of the basket (2) until the basket (2) is substantially filled; the basket (2) is closed and the previously extracted fraction of must, or at least part of said fraction, is then returned to the vessel (1) until the same is again filled and the basket (2), with the destemmed grapes contained therein, is completely immersed by the must.

## Patentansprüche

1. Fermentationsapparat für Weinherstellung, umfassend: einen Weinherstellungsbehälter (1) mit einem Boden (11) des Behälters, einer polygonalen oder kreisförmigen Seitenwand (12), die sich von dem Boden (11) erhebt, wobei sie ein Aufnahmevolumen (13) umgibt, und einer oberen Öffnung (14), die durch ein abnehmbares Dach (15) verschlossen ist; und einen Korb (2) zum Aufnehmen von entrappten Trauben, wobei der Korb (2) mindestens teilweise aus einem flüssigkeitsdurchlässigen und für Feststoffe im Wesentlichen undurchlässigen Wandmaterial hergestellt ist und in einer Position für vollständiges Einsetzen in den Weinbehälter (1) abnehmbar angeordnet werden kann, wobei der Korb ein Aufnahmefach (22) der entrappten Trauben, das sich um mindestens einen Kernbereich (23) bildet, definiert, wobei der Kernbereich (23) auf dem Aufnahmevolumen (13) des Behälters (1) offen ist, wenn der Korb (2) in der Position für das Einsetzen in den Behälter (1) ist, wobei der mindestens eine Kernbereich (23) durch das Wandmaterial hindurch nur für Flüssigkeiten mit dem Aufnahmefach (22) der entrappten Trauben in Austausch steht.

2. Apparat nach Anspruch 1, umfassend einen Boden (21) des Korbs (2), der geeignet ist, um angrenzend an den Boden (11) des Behälters angeordnet zu werden, und Seitenwände (24, 25), die sich von dem Boden (21) des Korbs erheben, wobei der Boden (21) und die Seitenwände (24, 25) des Korbs aus dem flüssigkeitsdurchlässigen und für Feststoffe im Wesentlichen undurchlässigen Wandmaterial hergestellt sind, wobei der Boden (21) und die Seitenwände (24, 25) das Aufnahmefach (22) der entrappten Trauben begrenzen, wobei er eine im Wesentlichen ringförmige Basis aufweist, wobei sich das Aufnahmefach (22) um einen der mindestens einen Kernbereiche (23), der sich zentral von dem Boden (21) des Korbs (2) erhebt, entwickelt.

3. Apparat nach Anspruch 1 oder 2, wobei der Boden (21) des Korbs (2) von den Seitenwänden (24, 25) des Korbs (2) abnehmbar oder zu öffnen ist.

4. Apparat nach einem der vorhergehenden Ansprüche, wobei der Korb (2) einen Körper, der mindestens eine Öffnung (27) zum Einfüllen der entrappten Trauben und mindestens eine jeweilige Öffnung oder abnehmbare Abdeckungskappe (28) passend zum reversiblen Verschließen der mindestens einen Öffnung (27) aufweist, umfasst.

5. Apparat nach Anspruch 4, wobei die Öffnung (27) zum Einfüllen der entrappten Trauben in einer Position gegenüber dem Boden (21) bereitgestellt ist, wobei die Kappe (28) eine bewegbare oder abnehmbare Verschlussabdeckung der Öffnung ist.

6. Apparat nach einem der vorhergehenden Ansprüche, wobei das Wandmaterial ein Netz- oder Schlitzbahnmaterial ist, das von einem Käfigrahmen (26) getragen wird.

7. Apparat nach Anspruch 6, wobei das Wandmaterial eine Vielzahl von länglichen Schlitzen mit Abmessungen von etwa 20 mm Länge mal 2 mm Breite umfasst.

8. Apparat nach einem der Ansprüche 2 bis 7, wobei der Boden (21) des Korbs (2) ein flacher ringförmiger Boden ist, der zwischen einer inneren geschlossenen Kante und einer äußeren geschlossenen Kante definiert ist, der Korb ferner umfassend die Seitenwände (24, 25), die koaxial angeordnet sind und von der inneren Kante beziehungsweise der äußeren Kante des ringförmigen Bodens aufragen.

9. Apparat nach Anspruch 8, wobei die innere und die äußere Kante kreisförmig sind oder den Umriss eines regelmäßigen Polygons aufweisen, die Seitenwände (24, 25) des Korbs, die koaxial angeordnet sind, umfassend eine zylindrische oder prismatische innere (24) und äußere Wand (25).

10. Apparat nach Anspruch 9, wobei die äußere Seitenwand (25) des Korbs und die polygonale oder kreisförmige Seitenwand (12) des Weinbehälters einen gegenseitigen radialen Abstand von etwa 10 bis 20 cm aufweisen.

11. Apparat nach einem der vorhergehenden Ansprüche, wobei die relativen Abmessungen zwischen dem Korb (2) und dem Behälter (1) so sind, dass sie ein Volumenverhältnis zwischen 70 % und 90 % definieren.

12. Apparat nach einem der vorhergehenden Ansprüche, wobei der Weinbehälter (1) und der Korb (2) Führungsmittel umfassen, die tauglich sind, miteinander zusammenzuwirken, um das Einsetzen des Korbs in den Behälter zu führen und ihre Position aufeinander auszurichten.

13. Apparat nach einem der vorhergehenden Ansprüche, wobei ein oder mehrere Tragefüße (21b) von dem Boden (21) des Korbs (2) vorstehen, wobei sie tauglich sind, um auf dem Boden (11) des Behälters anzustoßen.

14. Weinherstellungsverfahren, umfassend einen Fermentationsschritt, der mit dem Apparat nach einem der Ansprüche 1 bis 13 durchgeführt wird, wobei der Fermentationsschritt umfasst: Einführen des Korbs (2) in den Behälter (1); Einfüllen von entrappten Trauben in das Aufnahmefach (22) des Korbs (2); Kontrollieren des Füllens des Behälters (1) mit Traubenmost, sodass das Eintauchen des Korbs (2) in den Most vollständig ist; Warten, dass die Fermentation für die gewünschte Zeit stattfindet; Abnehmen des Korbs (2) und Entleeren der verbleibenden festen Bestandteile der entrappten Trauben außerhalb des Behälters (1); und Extrahieren des fermentierten Mosts aus dem Behälter (1).

15. Verfahren nach Anspruch 14, wobei nach dem Einfüllen der entrappten Trauben in den Korb (2) mit Fluten des Behälters mit Most durch die durchlässigen Wände des Korbs (2), bis der Behälter im Wesentlichen gefüllt ist, eine Fraktion des Mosts aus dem Behälter (1) extrahiert wird und gleichzeitig der Pegel der entrappten Trauben in dem Aufnahmefach (22) des Korbs (2) absinkt; weitere entrappte Trauben dann in das Fach (22) des Korbs (2) eingefüllt werden, bis der Korb (2) im Wesentlichen gefüllt ist; der Korb (2) geschlossen wird und die vorher extrahierte Fraktion von Most oder mindestens ein Teil davon dann in den Behälter (1) zurückgeführt wird, bis dieser erneut gefüllt ist und der Korb (2), mit den darin enthaltenen entrappten Trauben vollständig in den Most eingetaucht ist.

## Revendications

1. Appareil de fermentation pour la vinification comprenant : une cuve de vinification (1) avec une partie inférieure (11) de la cuve, une paroi latérale polygonale ou circulaire (12) s'élevant à partir de la partie inférieure (11), entourant un volume de contenance (13), et une ouverture supérieure (14) fermée par un toit amovible (15) ; et un panier (2) permettant de contenir des raisins égrappés, ledit panier (2) étant au moins partiellement constitué d'un matériau de paroi perméable aux liquides et sensiblement imperméable aux matières solides et pouvant être disposé de manière amovible dans une position d'insertion complète dans ladite cuve à vin (1), ledit panier définissant un compartiment de contenance (22) des raisins égrappés évoluant autour d'au moins une région centrale (23), ladite région centrale (23) étant ouverte sur ledit volume de contenance (13) de la cuve (1) lorsque le panier (2) est dans ladite position d'insertion dans la cuve (1), ladite au moins une région centrale (23) étant en communication de liquides uniquement, à travers ledit matériau de paroi, avec ledit compartiment de contenance (22) des raisins égrappés.

2. Appareil selon la revendication 1, comprenant une partie inférieure (21) du panier (2), adaptée pour être disposée adjacente à ladite partie inférieure (11) de la cuve, et des parois latérales (24, 25) s'élevant à partir de ladite partie inférieure (21) du panier, ladite partie inférieure (21) et lesdites parois latérales (24, 25) du panier étant constituées dudit matériau de paroi perméable aux liquides et sensiblement imperméable aux matières solides, ladite partie inférieure (21) et lesdites parois latérales (24, 25) délimitant ledit compartiment de contenance (22) des raisins égrappés, ayant une base sensiblement annulaire, moyennant quoi ledit compartiment de contenance (22) se développe autour d'une région centrale de ladite au moins une région centrale (23) s'élevant au centre de ladite partie inférieure (21) du panier (2).

3. Appareil selon la revendication 1 ou 2, dans lequel ladite partie inférieure (21) dudit panier (2) est amovible ou peut s'ouvrir à partir desdites parois latérales (24, 25) dudit panier (2).

4. Appareil selon l'une quelconque des revendications précédentes, dans lequel ledit panier (2) comprend un corps ayant au moins une ouverture (27) permettant de charger les raisins égrappés et au moins une ouverture respective ou un couvercle amovible respectif (28) apte à fermer de manière réversible ladite au moins une ouverture (27).

5. Appareil selon la revendication 4, dans lequel ladite ouverture (27) permettant de charger les raisins égrappés est prévue dans une position opposée à ladite partie inférieure (21), ledit couvercle (28) étant un couvercle de fermeture mobile ou amovible de ladite ouverture.

6. Appareil selon l'une quelconque des revendications précédentes, dans lequel ledit matériau de paroi est un matériau en maille ou en feuille fendue soutenu par un cadre de cage (26).

7. Appareil selon la revendication 6, dans lequel ledit matériau de paroi comprend une pluralité de fentes allongées de dimensions d'environ 20 mm d'allongement par 2 mm de largeur.

8. Appareil selon l'une quelconque des revendications 2 à 7, dans lequel ladite partie inférieure (21) dudit panier (2) est une partie inférieure annulaire plate définie entre un bord fermé interne et un bord fermé externe, le panier comprenant en outre lesdites parois latérales (24, 25) disposées coaxialement et s'élevant à partir dudit bord interne et dudit bord externe de ladite partie inférieure annulaire, respectivement.

9. Appareil selon la revendication 8, dans lequel lesdits bords interne et externe sont circulaires, ou ont le contour d'un polygone régulier, lesdites parois latérales (24, 25) dudit panier disposées coaxialement comprenant des parois interne (24) et externe (25) cylindriques ou prismatiques.

10. Appareil selon la revendication 9, dans lequel ladite paroi latérale externe (25) dudit panier et ladite paroi latérale polygonale ou circulaire (12) de ladite cuve à vin ont une distance radiale mutuelle d'approximativement 10 à 20 cm

11. Appareil selon l'une quelconque des revendications précédentes, dans lequel les dimensions relatives entre ledit panier (2) et ladite cuve (1) sont telles qu'elles définissent un rapport volumétrique compris entre 70 % et 90 %.

12. Appareil selon l'une quelconque des revendications précédentes, dans lequel ladite cuve à vin (1) et ledit panier (2) comprennent des moyens de guidage aptes à coopérer mutuellement, pour guider l'insertion du panier dans la cuve et renvoyer leur position l'un à l'autre.

13. Appareil selon l'une quelconque des revendications précédentes, dans lequel un ou plusieurs pieds de support (21b) font saillie à partir de ladite partie inférieure (21) dudit panier (2), aptes à venir en butée contre ladite partie inférieure (11) de ladite cuve.

14. Procédé de vinification comprenant une étape de fermentation réalisée avec l'appareil selon l'une quelconque des revendications 1 à 13, dans lequel ladite étape de fermentation comprend : l'introduction dudit panier (2) dans ladite cuve (1) ; le chargement de raisins égrappés dans le compartiment de contenance (22) dudit panier (2) ; la régulation du remplissage de la cuve (1) par le moût de raisin de sorte que l'immersion du panier (2) dans le moût est complète ; le fait d'attendre que la fermentation se déroule pendant la durée souhaitée ; le retrait du panier (2) et le déchargement du composant solide restant des raisins égrappés à l'extérieur de la cuve (1) ; et l'extraction du moût fermenté de la cuve (1).

15. Procédé selon la revendication 14, dans lequel, après le chargement des raisins égrappés dans le panier (2) accompagné de l'inondation de la cuve par le moût à travers les parois perméables du panier (2) jusqu'au remplissage sensible de ladite cuve, une fraction du moût est extraite de la cuve (1) avec abaissement concomitant du niveau des raisins égrappés dans le compartiment de contenance (22) du panier (2) ; d'autres raisins égrappés sont ensuite chargés dans le compartiment (22) du panier (2) jusqu'à ce que le panier (2) soit sensiblement rempli ; le panier (2) est fermé et la fraction de moût précédemment extraite, ou au moins une partie de ladite fraction, est ensuite renvoyée dans la cuve (1) jusqu'à ce que celle-ci soit à nouveau remplie et que le panier (2), avec les raisins égrappés qu'il contient, soit complètement immergé par le moût.
